# EUROPEAN PATENT APPLICATION

(11) **EP 1 832 664 A1**
(43) Date of publication of application: **12.09.2007**
(21) Application number: 07004345.0
(22) Date of filing: 02.03.2007
(51) Int. Cl.: C21B 5/00, C21B 7/16

(54) **Oxidant-swirled fossil fuel injector for a shaft furnace**

(30) Priority: 06.03.2006 US 368649
(71) Applicant: Air Products and Chemicals, Inc., Allentown, PA 18195-1501 (US)
(72) Inventor: Lanyi, Michael Dennis, Macungie, PA 18062 (US); Farmer, Larry Keith, Fleetwood, PA 19522 (US); Dudill, Roger, Solihull, West Midlands B913TS (GB)
(74) Representative: Haase, Wilm-Christian

(57) **Abstract**

An injector for injecting a swirling oxidant around a fossil fuel into a shaft furnace has a converging nozzle to improve combustion of the fossil fuel and reduce carbon soot formation. Fossil fuels, for example pulverized coal, may be introduced into the blast passageway and/or raceway cavity of a shaft furnace such as a blast furnace or cupola, to reduce the amount of coke needed for operation. Oxidant, which may be industrial grade oxygen, is swirled around the fossil fuel through a converging nozzle to improve the combustion of the fossil fuel thereby permitting increased substitution of fossil fuel for coke.

## Description

### BACKGROUND OF THE INVENTION

The present invention relates generally to fossil fuel injection into a shaft furnace. More specifically, the present invention relates to a fossil fuel injector where oxidant, which may be industrial grade oxygen, is swirled around the fossil fuel, which may be pulverized coal, to improve the combustion of the fossil fuel thereby permitting increased substitution of fossil fuel for coke.

Generally, in the production of molten iron in a shaft furnace, for example a blast furnace or a cupola, iron ore and/or iron scrap as a raw material and coke as a fuel are fed through the top of the furnace, while (hot) blast air is fed through a tuyere, which is positioned in a lower part of the furnace. The coke provides three main functions: fuel, reductant, and gas flow passage. Coke serves as fuel, reacting with blast air to provide a large part of the heat energy needed for the process. Coke serves as a reductant, both as a carbon constituent in carbon monoxide, which is needed for reducing the ore by the so-called "indirect reduction", and also as carbon, which is needed for reducing the ore by so-called "direct reduction," where carbon directly contacts heated and partially reduced oxides of iron. Coke also, due to its porosity, serves as a gas flow passage, allowing process gases to pass upward through the shaft furnace. As the coke is burned and the iron ore reduced, molten iron and slag are produced. Molten iron and slag are tapped from a position near the bottom of the shaft furnace.

For economic reasons, fossil fuels e.g. oil, natural gas, and coal, are injected into shaft furnaces to reduce the amount of coke needed for the process. Fossil fuels are typically injected into the blast passageway and/or the raceway of the shaft furnace. The blow pipe and tuyere make up the blast passageway. A number of shaft furnaces, particularly blast furnaces, around the world practice some form of fossil fuel injection thereby substituting more expensive coke with less-expensive fossil fuel(s). Pulverized coal is the most common fossil fuel injected to reduce coke usage. Economics favor increased use of pulverized coal thereby reducing the use of coke, but technical problems limit pulverized coal utilization.

As described above, one of the main functions of the coke is to serve as a gas flow passage, which is provided through its porosity. Process gases move upward through the shaft furnace through the pores in the coke as the charge (also called burden) moves downward. Preferably, the permeability of the charge is evenly distributed, allowing reducing gases to permeate throughout the charge and minimizing channeling. Uniform permeability is important for smooth operation of a shaft furnace. Insufficient and/or uneven permeability leads to nonuniform gas flows across the cross section of the furnace, resulting in nonuniform reduction of the charge and irregular decent of the charge.

As pulverized coal injection is increased, inadequate mixing between the injected coal and the blast air results in incomplete combustion of the injected coal, resulting in carbon soot formation. Since the velocity of the pulverized coal is high, and the raceway dimensions are only about 1 to 2 meters in length in a typical blast furnace, individual particles of coal have little time to completely combust or react. This problem also exists for other fossil fuels, such as heavy oil. Soot plugs the pores in the coke, inhibiting the gas flow characteristics, and thereby limits the amount of coal that can be injected to replace coke.

As greater amounts of fossil fuel are injected, industrial oxygen has been added to the process to boost furnace productivity and balance the cooling effect of the additionally injected fossil fuels. Injection of fossil fuel without industrial oxygen may decrease the temperature in the raceway due to endothermic cracking of the fossil fuel and the thermal capacity of the relatively cold fossil fuel. Industrial oxygen helps maintain the flame temperature in the raceway. The addition of oxygen also helps to improve the throughput of the furnace. Injection of both fossil fuel and industrial oxygen allows operators to increase production without exceeding acceptable tuyere-zone temperatures. Oxygen may be injected along with the fossil fuel, through separate passages in an injector, and/or blended with the blast air. The industrial oxygen may be blended with the blast air upstream and/or downstream of the stoves to provide an overall oxygen enrichment of the blast air.

Related disclosures include U.S. Pat. Nos. 3,758,090, 3,832,121, 4,921,532, 5,333,840, 5,544,868, 5,698,010, 5,746,804, and 6,319,458.

Since fossil fuels such as coal are less expensive than coke, it is desirable to substitute fossil fuel for coke, at levels greater than before, while maintaining smooth furnace operation.

It is desirable to provide more complete combustion of the fossil fuel thereby minimizing accumulation of unburned fossil fuel, for example soot, in the pores and interstices of the coke.

Pulverized coal is abrasive and may erode nozzle tips. It is desirable to provide an injector for coal that is resistant to erosion.

It is desirable to provide an injector for a shaft furnace that is resistant to overheating.

### BRIEF SUMMARY OF THE INVENTION

The present invention is intended to overcome the disadvantages of the prior art fossil fuel injectors used in shaft furnaces, while providing the desired benefits.

In an embodiment, the present invention relates to an injector for injecting a fossil fuel and an oxidant into a shaft furnace comprising a first conduit terminating substantially in a converging nozzle for passing the oxidant into a blast passageway and/or a raceway cavity, a second conduit having a nozzle disposed substantially within the converging nozzle of the first conduit for passing the fossil fuel into the blast passageway and/or the raceway cavity, and a means for swirling the oxidant defining a plurality of spiral-like passages having a rotation of at least 90 degrees or at least 120 degrees.

In another embodiment, the present invention relates to an injector for injecting a fossil fuel and an oxidant into a shaft furnace comprising a first conduit having a converging inner surface proximate the outlet end portion for passing the oxidant into a blast passageway and/or a raceway cavity, a second conduit having an outlet end portion disposed substantially within the outlet end portion of the first conduit for passing the fossil fuel into the blast passageway and/or the raceway cavity, and a means for swirling the oxidant defining a plurality of spiral-like passages having a rotation of at least 90 degrees or at least 120 degrees, wherein the distance between the outlet centers is less than the (hydraulic) diameter of the outlet of the second conduit.

In another embodiment, the present invention relates to an injector for injecting pulverized coal and industrial-grade oxygen into a blast furnace comprising a first conduit terminating substantially with a converging nozzle for passing the industrial-grade oxygen into a blast passageway and/or raceway cavity, and a second conduit having a nozzle disposed substantially within the converging nozzle of the first conduit for passing the pulverized coal into the blast passageway and/or raceway cavity, the second conduit defining spiral-like passages on its outer surface having a rotation of at least 120 degrees.

In another embodiment, the present invention relates to a shaft furnace comprising a blast passageway, a raceway cavity in fluid communication with the blast passageway, and an injector for injecting a fossil fuel and an oxidant into the blast passageway and/or the raceway cavity, the injector comprising a first conduit terminating substantially with a converging nozzle for passing the oxidant into a blast passageway and/or a raceway cavity, a second conduit having a nozzle disposed substantially within the converging nozzle of the first conduit for passing the fossil fuel into the blast passageway and/or the raceway cavity, and a means for swirling the oxidant defining a plurality of spiral-like passages having a rotation of at least 90 degrees or at least 120 degrees.

The means for swirling the oxidant may be formed on the outer surface of the second conduit such that the second conduit comprises the means for swirling the oxidant.

The means for swirling the oxidant may have a shape that is complementary to the converging nozzle of the first conduit and may be adjacent to the converging nozzle of the first conduit.

The plurality of spiral-like passages may have an average swirl angle of 25° to 65°. The swirl angle of the spiral-like passages may be substantially constant over the length of the spiral-like passages.

The leading edge of the second conduit may be recessed within the converging nozzle of the first conduit.

The injector may include a converging annular passage for receiving the oxidant from the plurality of spiral-like passages to expand and merge discrete oxidant jets into a rotating vortex for suppressing flame attachment at the tip of the injector. The converging annular passage may extend through a portion or the entire converging nozzle.

### BRIEF DESCRIPTION OF SEVERAL VIEWS OF THE DRAWINGS

FIG. 1 shows a schematic of an injector according to an embodiment of the present invention.

FIG. 2 shows a schematic showing an injector, blow pipe, tuyere, and raceway cavity.

FIG. 3 shows a schematic of an injector according to another embodiment of the present invention.

### DETAILED DESCRIPTION OF THE INVENTION

The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity. Likewise, reference to "an embodiment" does not limit the meaning to a single embodiment.

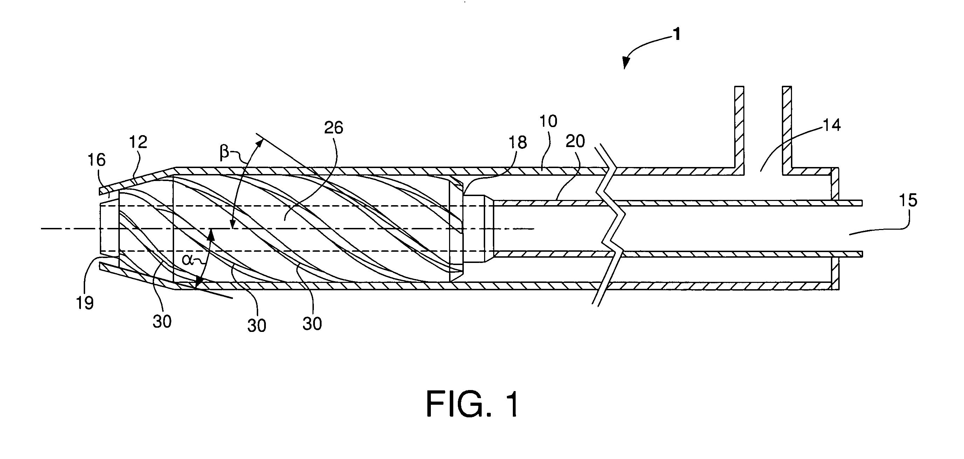

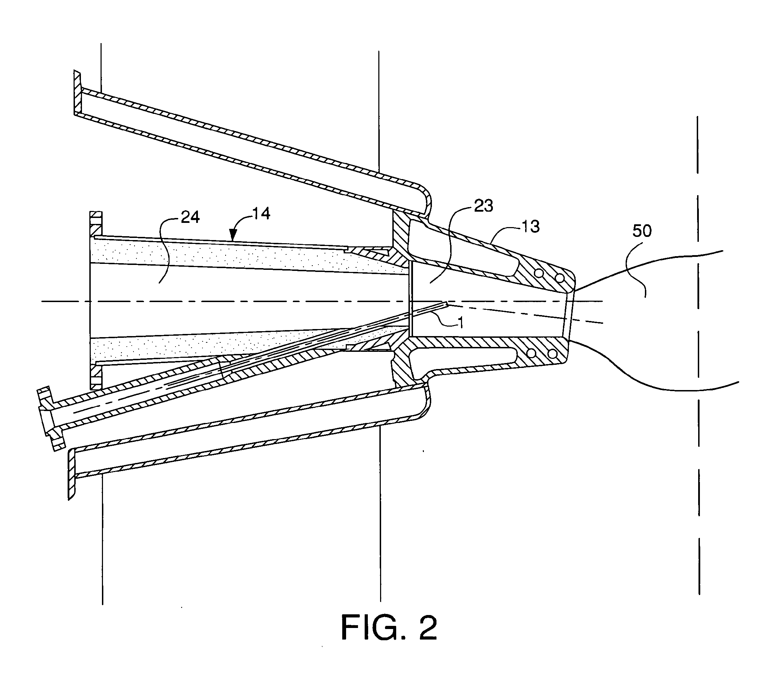

In an embodiment, the present invention relates to an injector for injecting a fossil fuel and an oxidant into a shaft furnace. Blast furnaces and cupolas are examples of shaft furnaces. With reference to FIG. 1 and FIG. 2, an injector 1 is shown, illustrating an embodiment according to the present invention. The fossil fuel may comprise solid fossil fuel, e.g. coal, and/or liquid fossil fuel, e.g. oil. The oxidant may comprise air, industrial oxygen, or mixtures thereof. Industrial oxygen is defined herein to be a gas comprising 80% to 100% oxygen.

The injector **1** comprises a conduit **10** having a first end portion for receiving oxidant through an oxidant inlet **14** and a second end portion terminating substantially with a converging inner surface **12** for passing the oxidant into at least one of a blast passageway **23**, **24** and a raceway cavity **50**. The second end portion has a converging inner surface **12** through at least a part of the second end portion. The angle, shown as α in FIG. 1, of the converging inner surface relative to the longitudinal axis of conduit **10** may be 5° to 45° or 10° to 30°. The blast passageway includes the passage **24** within the blow pipe **14** and the passage **23** within the tuyere **13** as shown in FIG. 2.

The injector **1** may be constructed from any suitable material known in the art, for example, stainless steels and other oxygen compatible materials capable of withstanding the hot blast temperature.

The injector **1** further comprises a conduit **20** having a first end portion for receiving the fossil fuel through an inlet **15** and a second end portion disposed substantially within the second end portion of conduit **10**. The second end portion of conduit **20** defines a fossil fuel passage **26** for passing the fossil fuel into at least one of the blast passageway **23, 24** and the raceway cavity **50**. Conduit **20** may be coaxial with conduit **10**.

Injector **1** further comprises a means for swirling the oxidant wherein the means for swirling the oxidant is at least partially disposed between the fossil fuel passage **26** and the second end portion of conduit **10**. The means for swirling the oxidant defines a plurality of spiral-like passages **30** having a rotation of at least 90 degrees or at least 120 degrees. The means for swirling the oxidant may be machined into the surface of conduit **20**, shown as grooves in conduit **20**. Although shown as grooves in conduit **20**, swirl vanes or other means for swirling the oxidant known in the art may also be used.

The apparatus according to the invention may comprise one or more of the following characteristics, taken alone or in any possible technical combinations.

As shown in FIG. 1, the means for swirling the oxidant may have a shape that is complementary to the second end portion of conduit **10**. The means for swirling the oxidant may continue into the converging section of conduit **10** such that the means for swirling the oxidant has a shape complementary to the converging inner surface **12**. The means for swirling the oxidant may be adjacent to the converging inner surface **12**. Since, as shown in the embodiment in FIG. 1, the spiral-like passages **30** continue from a cylindrical, nonconverging section of conduit **10** through a converging section of conduit **10**, the spiral diameter of the plurality of spiral-like passages **30** is greater at the inlet end **18** of the spiral-like passages **30** than at the outlet end **19** of the spiral-like passages **30**. The spiral diameter of the spiral-like passages **30** may have a shape that is complementary to the second end portion of conduit **10.**

The plurality of spiral-like passages **30** may have a length-averaged swirl angle of 25° to 65° or 35° to 45°. The swirl angle is defined as the angle between the tangent line through a spiral-like passage superimposed on the longitudinal axis of the fossil fuel passage, shown in FIG. 1 as β. The swirl angle may remain substantially constant over the length of the swirl means from the inlet end **18** to the outlet end **19** of the spiral-like passages **30**. For the case where the spiral-like passages are machined into the surface of conduit **20**, the traverse of the cutting tool needs to be adjusted to maintain the proper lead due to the changing diameter in the converging section, in order to maintain a substantially constant swirl angle. A substantially constant swirl angle is defined herein to mean within 5°. If desired, the swirl angle may vary over the length of the swirl means from the inlet end **18** to the outlet end **19** of the spiral-like passages **30**.

The plurality of spiral-like passages may have a generally rectangular cross-section.

Although the leading edge of conduit **10** and the leading edge of conduit **20** are shown in FIG. 1 to be flush with each other, the leading edge of conduit **20** may be recessed within the second end portion of conduit **10**. The leading edge of conduit **20** may also slightly extend beyond the outlet of conduit **10**.

The outlets of conduits **10** and **20** may be circular or some other suitable shape, for example slightly oval. If the shape is other than circular, the outlet dimension may be characterized in terms of a hydraulic diameter. In case the cross section is circular, the hydraulic diameter and diameter are equivalent. According to an aspect of the invention, the distance between the geometric center of the outlet of conduit **10** and the geometric center of the outlet of conduit **20** is less than the hydraulic diameter of the outlet of conduit **20**.

Injector **1** may further comprise a converging annular passage **16** for receiving oxidant from the plurality of spiral-like passages **30**. The converging annular passage **16** is defined between at least a portion the converging inner surface **12** and at least one of the conduit **20** and the means for swirling the oxidant. The converging annular passage **16** may extend through only a portion of the converging inner surface **12** as shown in FIG. 1. The converging annular passage **16** allows the discrete oxidant jets from the spiral-like passages **30** to expand and merge thereby providing a more continuous rotating vortex of oxidant prior to contacting the fossil fuel leaving conduit **20**. By allowing the high velocity oxidant jets to expand and merge into a rotating vortex, localized turbulence and potentially damaging flame attachment at the tip of the injector are both suppressed.

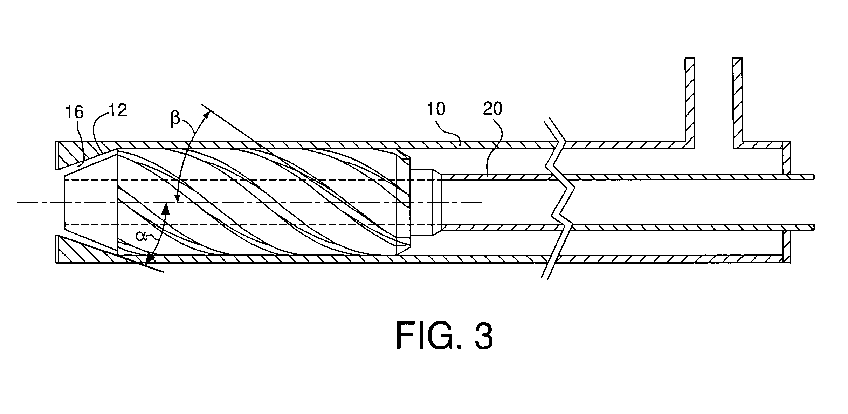

As shown in FIG. 3, the converging annular passage **16** may extend through the entire converging inner surface **12.** FIG. 3 also shows the leading edge of conduit **20** slightly recessed within the second end portion of conduit **10**. FIG. 3 also shows the second end portion of conduit **10** having a short cylindrical section downstream of the converging inner surface **12** that does not materially impact the flow characteristics of the oxidant stream and therefore corresponds to a second end portion terminating substantially with a converging inner surface.

In another embodiment, with reference to FIG. 1 and FIG. 2, the invention relates to a shaft furnace comprising a blast passageway **23, 24**, a raceway cavity **50** and any of the injector embodiments for injecting a fossil fuel and an oxidant into the shaft furnace as described above.

The injector of the present invention may be used in the same manner as conventional injectors.

The following examples are provided to illustrate the invention and benefits thereof. However, these examples are not to be construed to limit the scope of the present invention.

### EXAMPLE 1

An injector according to the present invention was constructed and tested. The injector comprised an inner conduit having a generally circular cross-section for conveying fossil fuel and an outer conduit, also having a generally circular cross-section, surrounding the inner conduit, which formed an annulus for conveying and swirling oxidant. The inner diameter of the inner conduit was about 8.687 mm. The outer diameter of the outer conduit was about 48.26 mm and the inner diameter of the outer conduit was about 29.49 mm. The inner surface of the outer conduit terminated in a converging inner surface having an angle of about 15° relative to the longitudinal axis.

The means for swirling the oxidant comprised six evenly-spaced spiral-like passages (grooves) machined into the outer surface of the inner conduit and had a rotation of about 180°. The spiral-like passages were generally rectangular, having width and height dimensions of about 2.5 mm by 2.5 mm. The swirl angle of the spiral-like passages was about 40°. The axial length of the swirl section was about 63.5 mm and continued into the converging section. The injector included a converging annular passage having a length of about 9 mm and height of about 2.5 mm. The leading edge of inner conduit was recessed within the outer conduit by about 3 mm.

The experiments were conducted using pulverized coal as the fossil fuel. The injector was tested with and without swirling oxidant. The swirling oxidant was oxygen from a liquid tank and was essentially pure oxygen. For cases where no swirling oxidant was used, the injector acted as a conventional straight bore injection lance.

Combustion air at ambient temperature was introduced into a hot furnace at a flow rate of about 2113 Nm³/h. The injector injected pulverized coal and optionally swirl oxidant into the combustion air stream entering the hot furnace to simulate the conditions of a blast passageway and/or raceway cavity. The pulverized coal was conveyed through the injector by about 35 m³/h of transport air.

Solid particles were collected from the exhaust stream for various operating conditions. The solid particles were analyzed for unburned carbon by the Percentage Loss on Ignition (LOI) method. The more carbon soot present in the sample, the greater percentage of the sample weight is lost. Less carbon soot production is desired for the shaft furnace process; therefore a lower LOI is desirable.

Table 1 summarizes process conditions and LOI results. Sample numbers 1-1 and 1-2 are to be compared with sample numbers 2-1 and 2-2. Sample numbers 3-1 and 3-2 are to be compared with sample numbers 4-1 and 4-2.

The injector was tested at various coal flow rates. The combustion air flow rate was maintained constant and the coal flow rate was adjusted to maintain about the same overall stoichiometric ratio for comparison cases. The roughly equivalent overall stoichiometric ratio is confirmed by the similar oxygen concentrations of the exhaust gas as shown in Table 1.

The LOI data shows that, on average, the samples corresponding to operating conditions with swirl oxidant have a lower percentage loss on ignition, indicating less carbon soot produced for the injector according to the present invention.

**Table 1.**

| Sample # | Coal flow rate (kg/h) | Swirl O₂ flow rate (Nm³/h) | Exhaust O₂ (vol %) | LOI (%) |
|---|---|---|---|---|
| 1-1 | 251.0 | 59 | 2.75 | 29.53 |
| 1-2 | 251.0 | 59 | 2.2 | 17.83 |
| 2-1 | 219.5 | 0 | 2.2 | 21.52 |
| 2-2 | 218.7 | 0 | 2.2 | 56.87 |
| 3-1 | 269.7 | 0 | 1.7 | 29.59 |
| 3-2 | 269.5 | 0 | 1.5 | 49.64 |
| 4-1 | 304.7 | 72 | 1.7 | 22.10 |
| 4-2 | 305.3 | 72 | 1.6 | 39.22 |

### EXAMPLE 2

A second injector according to the present invention was constructed and tested. This second injector was similar to the injector described in Example 1 with the exception that the cross-section of the spiral-like passages, which had a width of about 2.5 mm and a height of about 1.25 mm. The cross-sectional area of the spiral-like passages was therefore halved, resulting in a higher flow velocity for the same flow rate compared to the injector in Example 1.

Table 2 summarizes process conditions and LOI results for the injector having higher oxidant swirl velocity. The LOI data shows that the samples corresponding to operating conditions with swirl oxidant have a lower percentage loss on ignition, indicating less carbon soot produced for the injector according to the present invention. Exhaust 02 concentrations were not measured for Samples 6-1 and 6-2.

**Table 2.**

| Sample # | Coal flow rate (kg/h) | Swirl O₂ flow rate (Nm³/h) | Exhaust O₂ (vol %) | LOI (%) |
|---|---|---|---|---|
| 6-1 | 250 | 59 | --- | 36.09 |
| 6-2 | 220 | 0 | --- | 49.29 |

## Claims

1. An injector for injecting a fossil fuel and an oxidant into a shaft furnace comprising:
a first conduit having a first end portion for receiving the oxidant and a second end portion for passing the oxidant into at least one of a blast passageway and a raceway cavity, the second end portion terminating substantially with a converging inner surface;
a second conduit having a first end portion for receiving the fossil fuel and a second end portion disposed substantially within the second end portion of the first conduit, the second end portion of the second conduit defining a fossil fuel passage for passing the fossil fuel into at least one of the blast passageway and the raceway cavity; and
a means for swirling the oxidant at least partially disposed between the fossil fuel passage and the second end portion of the first conduit, the means for swirling the oxidant defining a plurality of spiral-like passages having a rotation of at least 90 degrees.

2. The injector of claim 1 wherein the plurality of spiral-like passages have a rotation of at least 120 degrees.

3. The injector of claim 1 or 2 wherein the second conduit comprises the means for swirling the oxidant.

4. The injector of any one of claims 1 to 3 wherein the means for swirling the oxidant has a shape complementary to the second end portion of the first conduit.

5. The injector of any one of claims 1 to 4 wherein the leading edge of the second conduit is recessed within the second end portion of the first conduit.

6. The injector of any one of claims 1 to 5 wherein the means for swirling the oxidant is adjacent to the converging inner surface of the first conduit.

7. The injector of any one of claims 1 to 6 wherein the converging inner surface of the second end portion of the first conduit and at least one of the second conduit and the means for swirling the oxidant define a converging annular passage for receiving oxidant from the plurality of spiral-like passages.

8. The injector of claim 7 wherein the length of the converging annular passage extends through only a portion of the converging inner surface.

9. The injector of claim 7 wherein the length of the converging annular passage extends through the entire converging inner surface.

10. The injector of any one of claims 1 to 9 wherein the plurality of spiral-like passages have an inlet end and an outlet end and wherein the spiral diameter of the plurality of spiral-like passages is greater at the inlet end than at the outlet end.

11. The injector of claim 10 wherein spiral diameter is complementary to the second end portion of the first conduit.

12. The injector of any one of claims 1 to 11 wherein the plurality of spiral-like passages have an average swirl angle of 25° to 65°.

13. The injector of claim 12 wherein the swirl angle of the spiral-like passages is substantially constant from the inlet end to the outlet end of the spiral-like passages.

14. An injector for injecting a fossil fuel and an oxidant into a shaft furnace comprising:
a first conduit having a first end portion for receiving the oxidant and a second end portion for passing the oxidant into at least one of a blast passageway and a raceway cavity, the second end portion having a converging inner surface through at least a part of the second end portion and terminating in a first outlet;
a second conduit having a first end portion for receiving the fossil fuel and a second end portion disposed substantially within the second end portion of the first conduit, the second end portion of the second conduit defining a fossil fuel passage for passing the fossil fuel into at least one of the blast passageway and the raceway cavity, the second end portion of the second conduit terminating in a second outlet having a hydraulic diameter; and
a means for swirling the oxidant at least partially disposed between the fossil fuel passage and the second end portion of the first conduit , the means for swirling the oxidant defining a plurality of spiral-like passages having a rotation of at least 90 degrees;
wherein the distance between the geometric center of first outlet and the geometric center of the second outlet is less than the hydraulic diameter of the second outlet.

15. The injector of claim 14 wherein the plurality of spiral-like passages have a rotation of at least 120 degrees.

16. The injector of claim 14 or 15 wherein the converging inner surface of the second end portion of the first conduit and at least one of the second conduit and the means for swirling the oxidant define a converging annular passage for receiving oxidant from the plurality of spiral-like passages.

17. The injector of claim 16 wherein the length of the converging annular passage extends through only a portion of the converging inner surface.

18. The injector of claim 16 wherein the length of the converging annular passage extends through the entire converging inner surface.

19. The injector of claim 14 wherein the plurality of spiral-like passages have an average swirl angle of 25° to 65° and wherein the swirl angle of the spiral-like passages is substantially constant from the inlet end to the outlet end of the spiral-like passages.

20. An injector for injecting pulverized coal and industrial-grade oxygen into a blast furnace comprising:
a first conduit having a first end portion for receiving the industrial-grade oxygen and a second end portion for passing the industrial-grade oxygen into at least one of a blast passageway and a raceway cavity, the second end portion terminating substantially with a converging inner surface; and
a second conduit having a first end portion for receiving the pulverized coal and a second end portion disposed substantially within the second end portion of the first conduit, the second end portion of the second conduit defining a pulverized coal passage for passing the pulverized coal into at least one of the blast passageway and the raceway cavity, the second end portion of the second conduit defining spiral-like passages having a rotation of at least 120 degrees on the outer surface of the second end portion of the second conduit.

21. A shaft furnace comprising:
a blast passageway;
a raceway cavity in fluid communication with the blast passageway; and
an injector for injecting a fossil fuel and an oxidant into at least one of the blast passageway and the raceway cavity, the injector comprising:
a first conduit having a first end portion for receiving the oxidant and a second end portion for passing the oxidant into at least one of the blast passageway and the raceway cavity, the second end portion terminating substantially with a converging inner surface;
a second conduit having a first end portion for receiving the fossil fuel and a second end portion disposed substantially within the second end portion of the first conduit, the second end portion of the second conduit defining a fossil fuel passage for passing the fossil fuel into at least one of the blast passageway and the raceway cavity; and
a means for swirling the oxidant at least partially disposed between the fossil fuel passage and the second end portion of the first conduit, the means for swirling the oxidant defining a plurality of spiral-like passages having a rotation of at least 90 degrees.
